# EUROPEAN PATENT SPECIFICATION

(11) **EP 1 826 115 B1**
(45) Date of publication and mention of the grant of the patent: **03.03.2010**
(21) Application number: 06026059.3
(22) Date of filing: 15.12.2006
(51) Int. Cl.: B62M 9/12

(54) **Low profile rear derailleur**
Hinterradkettenschaltung mit niedrigem Profil
Dérailleur arrière à profil bas

(30) Priority: 28.02.2006 US 307941; 09.06.2006 US 423247
(43) Date of publication of application: 29.08.2007
(60) Divisional application: 09154602.8
(73) Proprietor: SHIMANO INC., Osaka 590-8577 (JP)
(72) Inventor: Oseto, Shinya, Sakai-ku, Sakai City Osaka 590-8577 (JP); Kunisawa, Satoru, Sakai-ku, Sakai City Osaka 590-8577 (JP); Yamaguchi, Souta, Sakai-ku, Sakai City Osaka 590-8577 (JP)
(74) Representative: Hofmann, Harald

(56) References cited:
- EP-A- 0 542 077
- EP-A- 1 099 620
- FR-A- 922 775
- US-A- 4 758 205
- US-A- 4 789 379
- US-A1- 2004 106 482

## Description

### BACKGROUND OF THE INVENTION

The present invention is directed to bicycles and, more particularly, to a low profile rear derailleur used to switch a chain among a plurality of sprockets that rotate with the rear wheel.

A bicycle rear derailleur is used to selectively engage a chain with one of a plurality of sprockets that rotate with the rear wheel of the bicycle. A typical rear derailleur comprises a base member, a movable member supporting a chain guide, and a linking mechanism coupled between the base member and the movable member so that the chain guide moves laterally relative to the base member to shift the chain among the plurality of sprockets. The linking mechanism comprises a pair of link members connected to the base member and to the movable member to form a parallelogram, and the base member is mounted to the rear end of the bicycle frame by a mounting bolt that screws into a threaded opening formed in the frame. A biasing member, usually in the form of a spring, is mounted to the linking mechanism so that the movable member is biased either laterally inward or laterally outward relative to the base member. The biasing member often comprises a coil spring mounted between the base member and the movable member and sandwiched between the pair of link members.

Because of the nature of the lateral movement of the chain guide required to switch the chain among the plurality of sprockets, the linking mechanism, the movable member and the chain guide all protrude laterally outward by a significant distance, especially when the chain is engaged with the laterally outermost rear sprocket. The effect is further increased by the fact that the coil spring is sandwiched between the pair of link members, since the link members must be spaced apart from each other to accommodate the spring. As a result, the chain guide is susceptible to striking or becoming entangled with nearby objects, especially when riding off-road in mountainous terrain. The effect becomes more severe as the number of sprockets increase, thereby increasing the lateral distance that the chain guide must travel.

Document FR 922 775 discloses a bicycle rear derailleur according to the preamble of claim 1.

Since the chain must be long enough to simultaneously engage the largest front and rear sprockets, some mechanism must be provided to take up the slack in the chain when the chain engages a combination of front and rear sprockets other than the largest front and rear sprockets and the full length of the chain is not needed. The chain guide usually is designed for this purpose. More specifically, the chain guide usually includes a guide pulley and a tension pulley mounted below the guide pulley, and the chain guide is biased in a clockwise direction. The guide pulley causes the chain to move from one rear sprocket to another, and the clockwise bias of the chain guide causes the tension pulley to pull the chain into a serpentine shape, thereby taking up the slack in the chain when the full length of the chain is not needed. However, when the length of chain needed to simultaneously engage the largest front and rear sprockets differs greatly from the length of chain needed to simultaneously engage the smallest front and rear sprockets, the distance between the guide pulley and the tension pulley also must be large so that the tension pulley can pull the chain sufficiently to take up the slack in both situations. Unfortunately, the further the tension pulley is from the guide pulley, the closer the tension pulley becomes toward the ground. This increases the risk that the chain guide will strike or becoming entangled with nearby objects.

### SUMMARY OF THE INVENTION

According to the invention, a bicycle rear derailleur comprises a base member, a movable member, and a linking member coupled between the base member and the movable member so that the movable member moves laterally relative to the base member. The linking member rotates relative to the base member around a first axis, and the linking member rotates relative to the movable member around a second axis. A biasing member is coupled to bias the movable member laterally relative to the base member. The biasing member is retained at a location outside of an outer peripheral surface of the linking member when viewed perpendicular to at least one of the first axis or the second axis, and the linking member overlaps at least a portion of the biasing member when viewed perpendicular to the at least one of the first axis or the second axis. The biasing member comprises a spring, and the spring comprises a coil spring that coils around a spring axis that extends in a direction substantially perpendicular to at least one of the first axis and the second axes.

### BRIEF DESCRIPTION OF THE DRAWINGS

Fig. 1 is a laterally outer view of a particular embodiment of a rear derailleur in a high speed position;

Fig. 2 is a laterally inner view of the derailleur;

Fig. 3 is a top view of the derailleur in the high speed position;

Fig. 4 is a bottom view of the derailleur in the high speed position;

Fig. 5 is a front view of the derailleur in the high speed position;

Fig. 6 is a rear view of the derailleur in the high speed position;

Fig. 7 is a side view of the derailleur in a low speed position;

Fig. 8 is a top view of the derailleur in the low speed position;

Fig. 9 is a bottom view of the derailleur in the low speed position;

Fig. 10 is a front view of the derailleur in the low speed position;

Fig. 11 is a rear view of the derailleur in the low speed position;

Fig. 12 is a laterally outer view of the rear derailleur attached- to a conventional frame;

Fig. 13 is a laterally outer view of another embodiment of a rear derailleur in a position for engaging the chain with the smallest rear sprocket when the front derailleur engages the chain with the smallest front sprocket;

Fig. 14 is a laterally inner view of the derailleur;

Fig. 15 is a rear view of the derailleur in a position for engaging the chain with the smallest rear sprocket;

Fig. 16 is a view of the derailleur parallel to the pivot axes of the linking mechanism;

Fig. 17 is a view of the derailleur perpendicular to the pivot axes of the linking mechanism;

Figs. 18A-18C are detailed outer, inner and cross sectional views of an end of a link member at the movable member;

Fig. 19 is a cross sectional view at the movable member and the guide pulley;

Fig. 20 is an oblique view of the pivot shaft shown in Fig. 19;

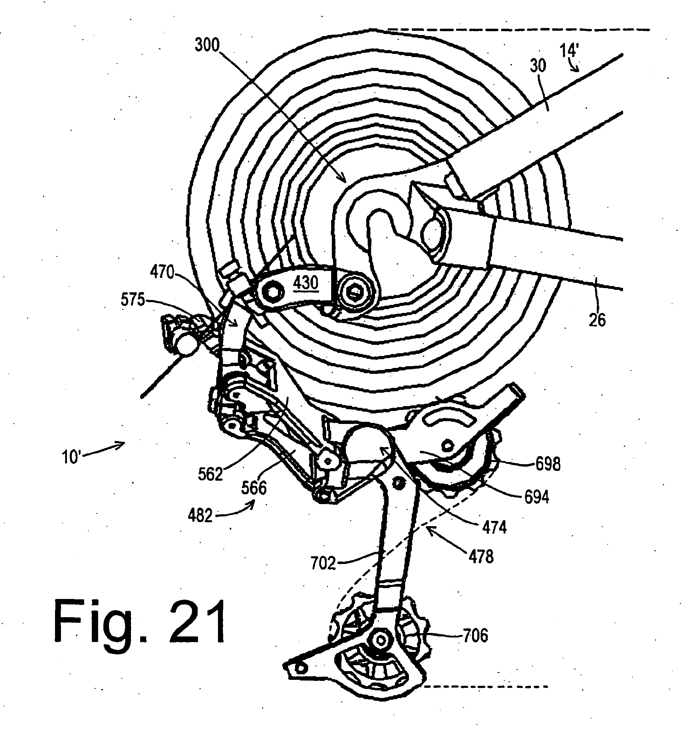

Fig. 21 is a laterally outer view of the rear derailleur in a position for engaging the chain with the largest rear sprocket when the front derailleur engages the chain with the smallest front sprocket;

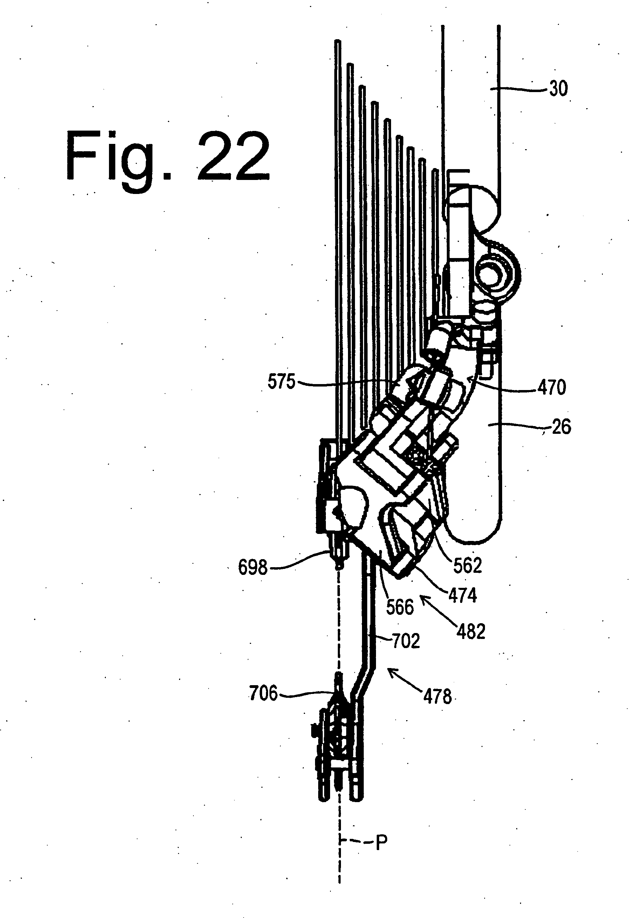

Fig. 22 is a rear view of the derailleur in a position for engaging the chain with the largest rear sprocket when the front derailleur engages the chain with the smallest front sprocket; and

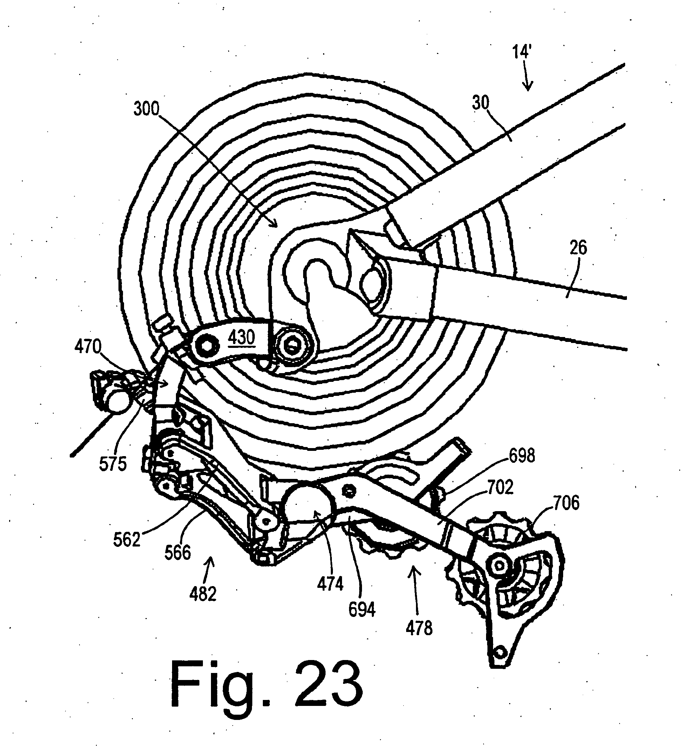

Fig. 23 is a laterally outer view of the rear derailleur in a position for engaging the chain with the largest rear sprocket when the front derailleur engages the chain with the largest front sprocket.

### DETAILED DESCRIPTION OF THE EMBODIMENTS

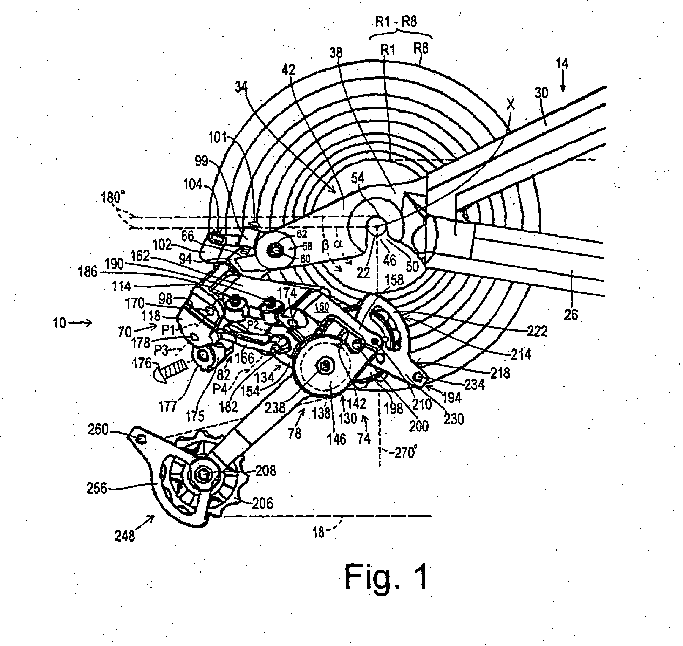

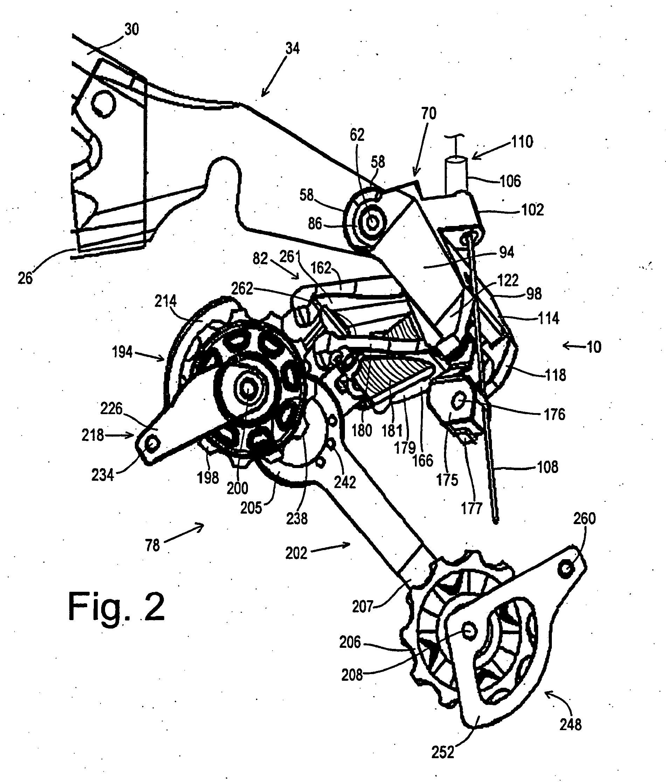

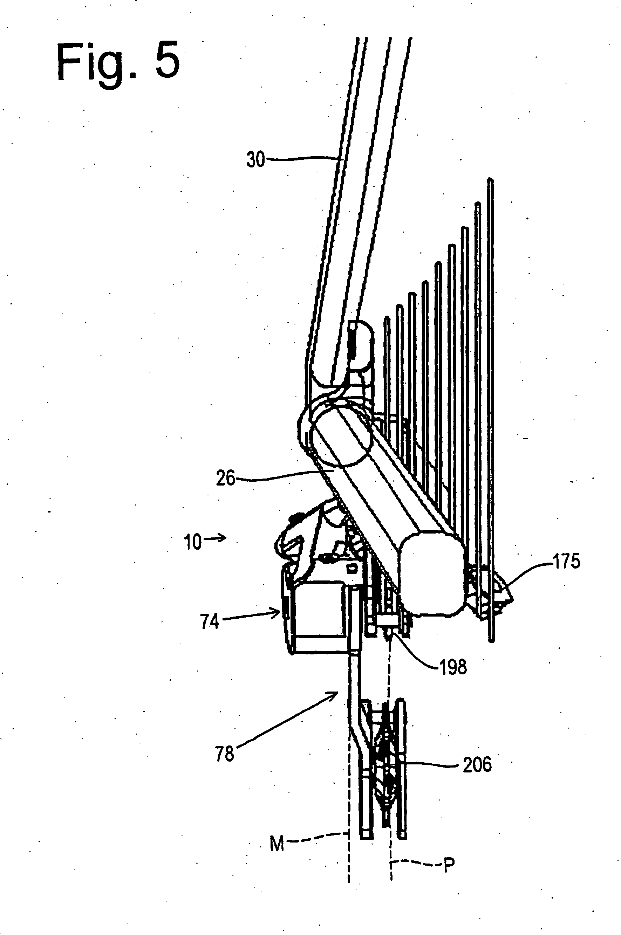

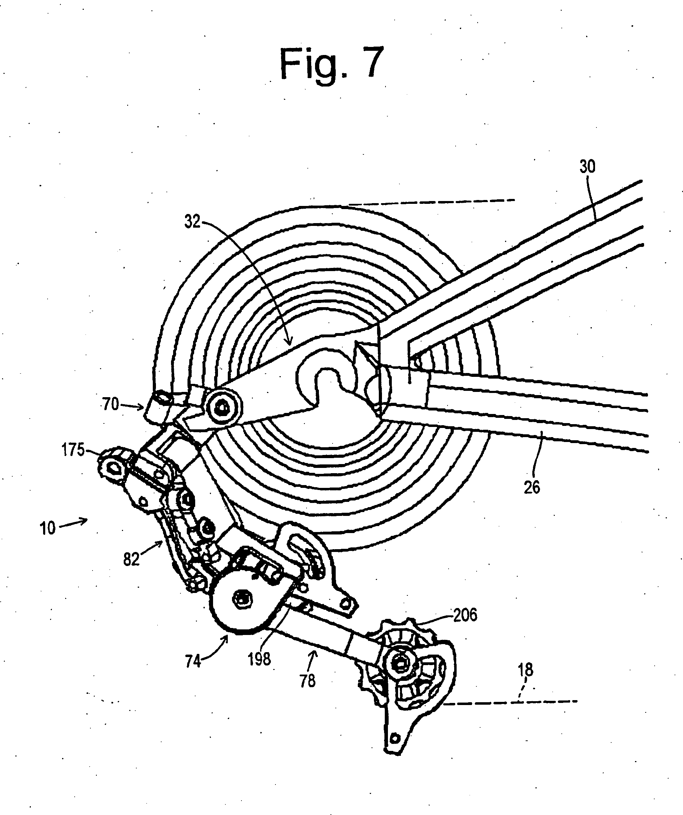

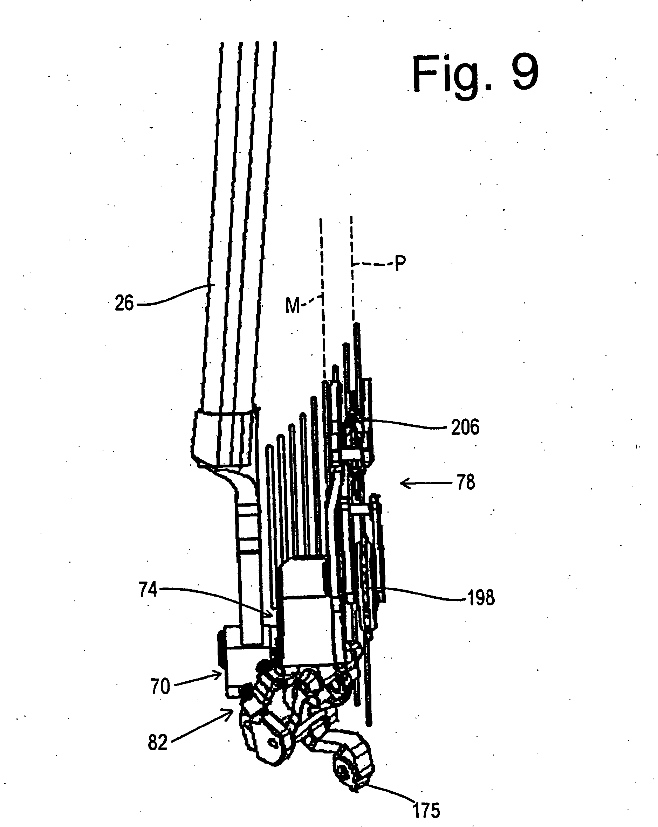

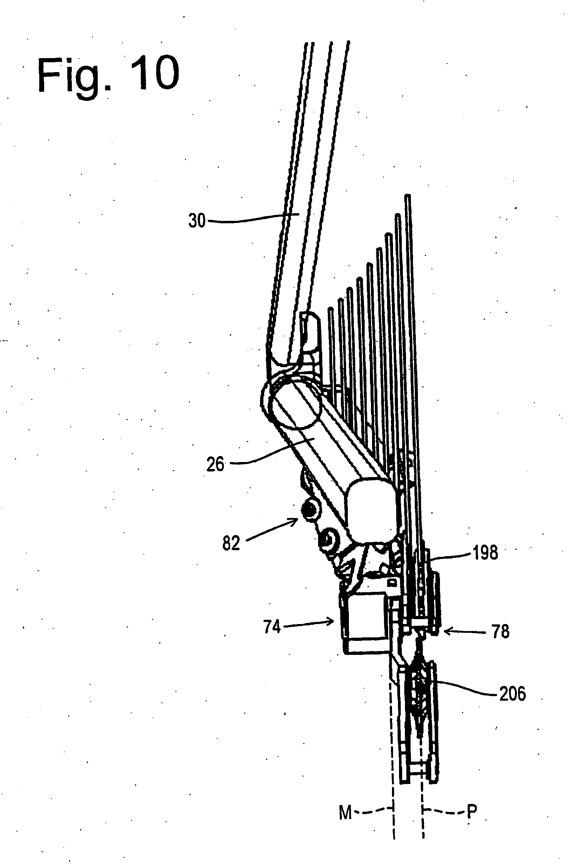

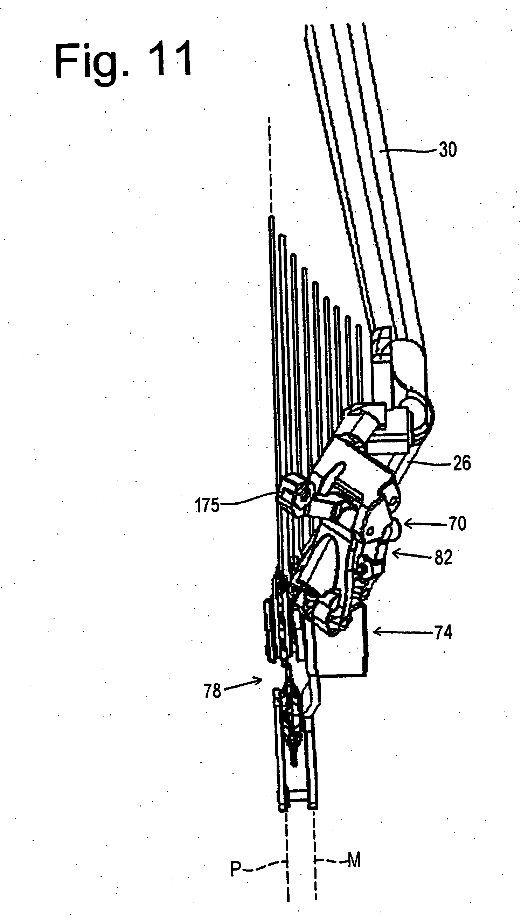

Figs. 1-11 are various views of a particular embodiment of a low profile derailleur 10 in various positions. For example, Fig. 1 is a laterally outer view of rear derailleur 10, and Fig. 2 is a rear view of derailleur 10. As shown in Fig. 1, rear derailleur 10 is attached to the rear portion of a bicycle frame 14 for guiding a chain 18 among a plurality of rear sprockets R1-R8 that rotate coaxially around a rear wheel axle 22 supported to frame 14, wherein axle 22 defines a rotational axis X.

Bicycle frame 14 is part of an overall bicycle frame that includes a chain stay 26, a seat stay 30 and a frame end 34 (commonly referred to as a dropout) that joins chain stay 26 and seat stay 26 together, typically by welding chain stay 26 and seat stay 30 to frame end 34. Conceptually, each of these frame structures is well known. However, this embodiment employs a configuration of frame end 34 that differs from common frame ends. More specifically, frame end 34 comprises a forward portion 38 and a rearward portion 42, wherein forward portion 38 extends from chain stay 26 and seat stay 30 to a horizontal position aligned with rotational axis X, and rearward portion 42 extends from the horizontal position aligned with rotational axis X rearward. A junction between forward portion 38 and rearward portion 42 forms an axle receiving slot 46 dimensioned to receive rear axle 22 therein. In this embodiment, axle receiving slot 46 is oriented substantially vertical with a slight incline and includes an open end 50 and a closed end 54, wherein open end 50 is disposed below closed end 54. Rearward portion 42 extends rearward and downward at an incline and forms a derailleur attachment structure in the form of a laterally projecting annular mounting boss 58 with an opening 60 dimensioned to receive a derailleur mounting bolt 62 therein. Of course, in some embodiments mounting boss 58 need no project laterally, in which case the surface of opening 60 forms the derailleur attachment structure. In this embodiment, opening 60 may be located from approximately 180° to approximately 240° relative to rotational axis X, or, to facilitate measurement independently of axle 22, from approximately 180° to approximately 240° relative to closed end 54 of axle receiving slot 46. Rearward portion 42 of frame end 34 extends further rearward from mounting boss 58 to form a position setting abutment 66 that functions in a manner discussed below.

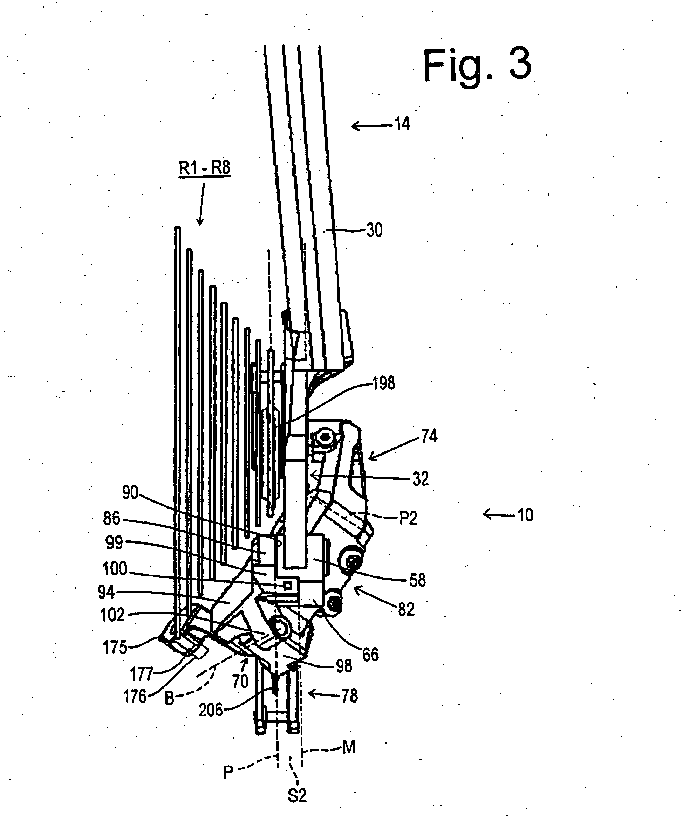

Derailleur 10 comprises a base member 70, a movable member 74 that supports a chain guide 78, and a linking mechanism 82 coupled between base member 70 and movable member 74 so that chain guide 78 moves laterally relative to base member 70. As best seen in Figs. 2 and 3, base member 30 comprises an annular mounting boss 86 with a mounting surface 90 that faces laterally outward to face mounting boss 58 on frame end 34, a transition portion 94 that extends rearward and downward at an incline from mounting boss 86, and a link coupling portion 98 disposed at a lower end portion of extension portion 94.

As best seen in Figs. 1 and 3, an adjuster mounting boss 99 extends rearward and then laterally outward from mounting boss 86. A laterally outer portion of adjuster mounting boss 99 includes an adjuster mounting structure in the form a threaded opening 100 dimensioned to threadingly engage an adjuster in the form of an adjusting screw 101. The tip of adjusting screw 101 abuts against position setting abutment 66 on frame end 34. Thus, the rotational position between frame end 34 and base member 70 may be adjusted simply by rotating adjusting screw 101.

An outer casing coupler 102 in the form of a hollow cylinder is disposed on an upper portion of transition portion 94, wherein outer casing coupler 102 is dimensioned to couple to and terminate an outer casing 106 of a Bowden cable 110 in a known manner. Outer casing coupler 102 is positioned to be located rearward from rotational axis X and, more particularly, rearward from frame end 34 and at least partially laterally inward from mounting surface 90 of base member 70 as shown in Fig. 3. Outer casing coupler 102 includes an outer casing receiving bore 104 having a bore axis B that is inclined relative to a pulley plane P described below. If desired, a cable adjusting bolt (not shown), the concept and structures of which are well known, may be mounted in outer casing receiving bore 104 so as to be disposed between outer casing coupler 102 and outer casing 106.

As shown in Figs. 1 and 2, link coupling portion 98 includes a support wall 114, an outer link mounting ear 118 and an inner link mounting ear 122. In this embodiment, inner link mounting ear 122 is formed as an extension of transition portion 94 that inclines laterally inwardly from front to rear and from top to bottom, support wall 114 extends laterally outwardly from inner mounting ear 122 so as to incline rearwardly from top to bottom and from transition portion 94 to the laterally outer end, and outer link mounting ear 118 extends downwardly from support wall 114 so as to incline laterally inwardly from front to rear and from top to bottom.

Movable member 74 comprises a main body 130 and a link mounting frame 134. In this embodiment, main body 130 comprises a generally cylindrical member that houses a torsion coil spring 138, one end of which is inserted into a spring mounting opening 142 formed in a laterally outer side wall 146 of main body 130. Link mounting frame 134 comprises an upper link mounting boss 150, a lower link mounting boss 154, and an upper chain guide link mounting frame 158, all of which are formed as one piece with main body 130.

Linking mechanism 82 comprises linking members in the form of a laterally outer upper link 162 and a laterally inner lower link 166. A first end of upper link 162 is straddled by link coupling portion 98 of base member 70 and is pivotably connected thereto by a pivot shaft 170 that defines a pivot axis P1. The second end of upper link 162 is forked to straddle upper link mounting boss 150 of link mounting frame 134 of movable member 74 and is pivotably connected thereto by a pivot shaft 174 that defines a pivot axis P2. Because of this arrangement, a distance between the outermost edges of the first end of upper link 162 at base member 70 is less than a distance between the outermost edges of the second end of upper link 162 at movable member 74. An outer limit adjusting screw 186 and an inner limit adjusting screw 190 are mounted on upper link 162 to adjust the laterally outermost and laterally innermost positions of movable member 74, respectively, in a well known manner.

Similarly, a first end of lower link 166 is straddled by link coupling portion 98 of base member 70 and is pivotably connected thereto by a pivot shaft 178 that defines a pivot axis P3. An actuating arm 175 extends downwardly and laterally inwardly from the first end of lower link 166 so as to generally conform to the inclined contour formed by the outer peripheral surfaces of the plurality of sprockets R1-R8. A cable attachment structure in the form of a bolt 176 and a clamping washer 177 is provided at the outer end of actuating arm 175 to attach an inner cable 108 of Bowden cable 106 as shown in Fig. 2. As shown in Fig. 3, bolt 176 and washer 177 are disposed laterally inward from mounting surface 90 of base member 70 when chain guide 78 is located at a laterally outermost position.

Lower link 166 is forked beginning in close proximity to pivot shaft 178 to form legs 179 and 180 (Fig. 2) that extend toward movable member 74. Legs 179 and 180 straddle lower link mounting boss 154 of link mounting frame 134 of movable member 74 and is pivotably connected thereto by a pivot shaft 182 (Fig. 1) that defines a pivot axis P4. Because of this arrangement, a distance between the outermost edges of the first end of lower link 166 at base member 70 is less than a distance between the outermost edges of the second end of lower link 166 at movable member 74.

As shown in Fig. 2, legs 179 and 180 of lower link 166 receive a coiled return spring 181 therebetween. One end of spring 181 is connected to base member 70 at pivot shaft 170, and the other end of spring 181 is connected to movable member 74 at pivot shaft 182. As a result, spring 181 biases movable member 74 laterally outwardly.

Chain guide 78 comprises an upper chain guide link 194, a first or upper guide pulley 198 rotatably mounted to upper chain guide link 194 through a pivot shaft 200, a lower chain guide link 202, and a second or lower tension pulley 206 rotatably mounted to lower chain guide link 202 through a pivot shaft 208. Upper chain guide link 194 is pivotably connected to upper chain guide link mounting frame 158 through a pivot shaft 210. Upper chain guide link 194 comprises a chain pushing member 214 and a chain regulating unit 218. Chain pushing member 214 is disposed between upper chain guide link mounting frame 158 and guide pulley 198, with an arcuate portion 222 disposed in close proximity to the teeth on guide pulley 198. Chain pushing member 214 is provided to push chain 18 when switching chain 18 from a smaller diameter sprocket to a larger diameter sprocket and to prevent chain 18 from derailing from guide pulley 198. Chain pushing member 214 rotates around a chain pushing member rotational axis defined by pivot shaft 210, which in this embodiment is offset from a first pulley axis defined by pivot shaft 200. As a result, both guide pulley 198 and chain pushing member 214 rotate around the chain pushing member rotational axis defined by pivot shaft 210.

Chain regulating unit 218 comprises an inner plate 226, an outer plate 230 and a regulator pin 234. A radially inner end of inner plate 226 is coupled to pivot shaft 200, and a radially outer end of inner plate 226 is fastened to one end of regulator pin 234. A radially inner portion of outer plate 230 joins with chain pushing member 214 and is coupled to pivot shaft 210, and a radially outer end of outer plate 230 is fastened to the other end of regulator pin 234. Inner plate 226 helps to prevent chain 18 from derailing from guide pulley 198 when switching chain 18 from a larger diameter sprocket to a smaller diameter sprocket, and outer plate 230 helps to prevent chain 18 from derailing from guide pulley 198 when switching chain 18 from a smaller diameter sprocket to a larger diameter sprocket. Regulator pin 234 helps to prevent excessive radial movement of chain 18 and ensures that upper chain guide link 194 rotates counterclockwise around pivot shaft 210 in response to forward swinging of chain 18. However, chain regulating unit 218 may be omitted in some embodiments.

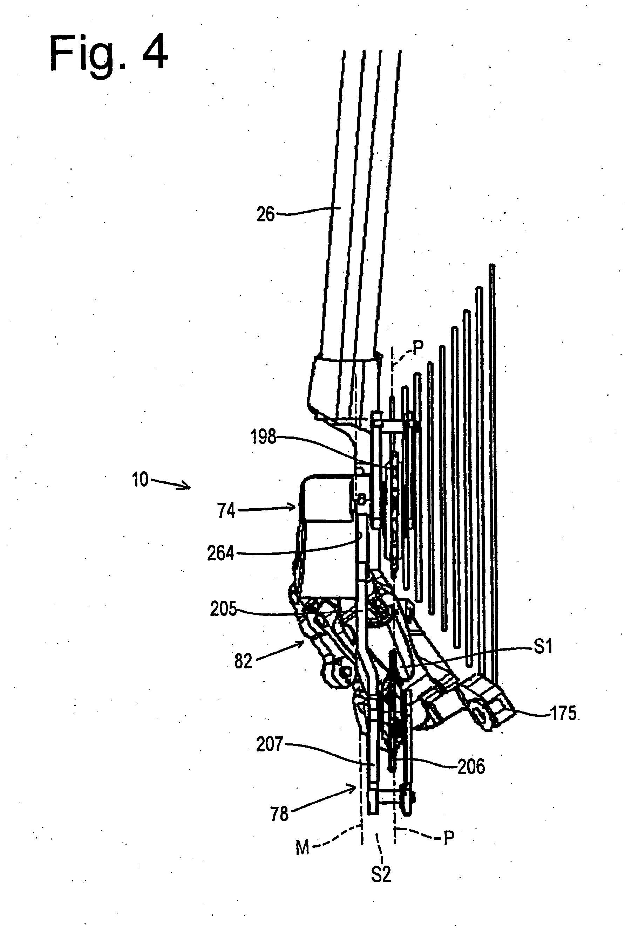

As shown in Fig. 2, an upper end 205 of lower chain guide link 202 is pivotably coupled to main body 130 of movable member 74 through a pivot shaft 238 and includes a plurality of, e.g., three spring coupling openings 242. The other end of spring 138 mentioned above is inserted into one of the spring coupling openings 242 to set a desired biasing force on lower chain guide link 202. As a result, lower chain guide link 202 is biased clockwise in Fig. 1. A lower end 207 of lower chain guide link 202 rotatably supports tension pulley 206 through pivot shaft 208 and nonrotatably supports a chain regulating unit 248. In this embodiment, as shown in Fig. 4, upper end 205 is substantially vertically straight and is laterally inwardly offset relative to lower end 207, which also is substantially vertically straight. As with chain regulating unit 218, chain regulating unit 248 comprises an inner plate 252, an outer plate 256 and a regulator pin 260. A radially inner end of inner plate 252 is coupled to pivot shaft 208, and a radially outer end of inner plate 252 is fastened to one end of regulator pin 260. In this embodiment, outer plate 256 is formed as a part of lower chain guide link 202 and supports pivot shaft 208. A radially outer end of outer plate 256 is fastened to the other end of regulator pin 260. Inner plate 252 helps to prevent chain 18 from derailing from tension pulley 206 when switching chain 18 from a larger diameter sprocket to a smaller diameter sprocket, and outer plate 256 helps to prevent chain 18 from derailing from tension pulley 206 when switching chain 18 from a smaller diameter sprocket to a larger diameter sprocket. Regulator pin 260 helps to prevent excessive radial movement of chain 18. Chain regulating unit 248 may be omitted in some embodiments.

In this embodiment, base member 70, movable member 74, chain guide 78 and linking mechanism 82 are dimensioned so that guide pulley 198 is located at a range of from approximately 220° to approximately 270° relative to rotational axis X when chain guide 78 is disposed in the laterally outermost position.

As shown in Fig. 4, guide pulley 198 has a pulley plane P that bisects guide pulley 198. In this embodiment, each tooth on guide pulley 198 is symmetrical and centered on the pulley when viewed perpendicular to pivot shaft 200 so that pulley plane P is located in the center of guide pulley 198, and all of the pulley teeth lie in pulley plane P. In this embodiment, pulley plane P also bisects tension pulley 206. In order to provide a decreased laterally outward profile for derailleur 10, the components are structured so that pulley plane P intersects at least one of upper link 162 or lower link 166 when chain guide 78 is disposed in a position somewhere between a laterally outermost rest position and a laterally innermost position (such as the laterally outermost position shown in Fig. 4).

As used throughout herein, the word "intersect" has the ordinary meaning of having one or more points in common. Thus, the term also includes, for example, a tangent relationship. The laterally outermost position may be the laterally outermost position when derailleur 10 is removed from the bicycle. In this case, the laterally outermost position may be determined by the position of chain guide 78 with the derailleur at rest and subjected only to the biasing force of return spring 181, and the laterally innermost position is determined by the position of chain guide 78 when chain guide 78 is manually pulled to its laterally innermost position. Alternatively, the laterally outermost position may be determined by the position of chain guide 78 when it is set to be aligned with the smallest diameter rear sprocket R1, and the laterally innermost position may be determined by the position of chain guide 78 when it is set to be aligned with the largest diameter rear sprocket R8. The word "between" is used in an inclusive sense.

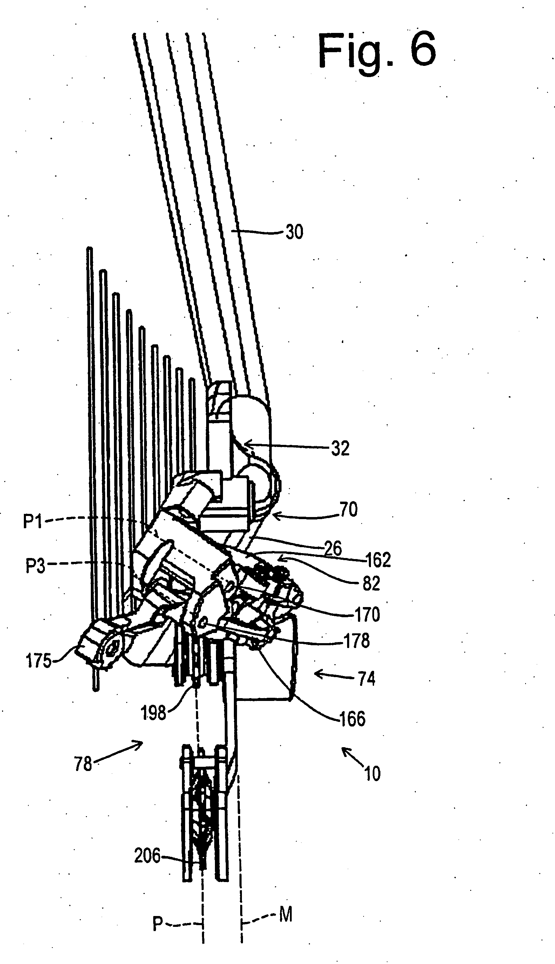

Furthermore, in this embodiment, pulley plane P intersects at least one of pivot axis P1 or pivot axis P3 when measured across all components at the coupling when chain guide 78 is disposed in a position somewhere between a laterally outermost rest position and a laterally innermost position (such as the laterally outermost position shown in Fig. 6). For example, pivot shaft 170 defines pivot axis P1 and couples upper link 162 to base member 70. The laterally outer tip of pivot shaft 170 is exposed at outer link mounting member 118, whereas the laterally inner tip of pivot shaft 170 is inserted into a blind bore (not shown) in inner link mounting member 122 so that the inner lateral tip is not exposed at inner link mounting member 122. The length of pivot axis P1 measured across all components at the coupling therefore extends from the laterally outer tip of pivot shaft 170 at pivot axis P1 to the laterally inner surface of inner link mounting member 122 at pivot axis P1. Similarly, pivot shaft 178 defines pivot axis P3 and couples lower link 166 to base member 70. The laterally outer tip of pivot shaft 178 is exposed at outer link mounting member 118, whereas the laterally inner tip of pivot shaft 178 is inserted into a blind bore (not shown) in inner link mounting member 122 so that the inner lateral tip is not exposed at inner link mounting member 122. The length of pivot axis P3 measured across all components at the coupling therefore extends from the laterally outer tip of pivot shaft 178 at pivot axis P3 to the laterally inner surface of inner link mounting member 122 at pivot axis P3.

In this embodiment, pulley plane P intersects both upper link 162 and lower link 166 as well as pivot axes P1 and P3 when chain guide 78 is disposed in a position somewhere between the laterally outermost position and the laterally innermost position, such as the laterally outermost position shown in Fig. 4. However, it is not necessary to intersect all recited components at all lateral positions of chain guide 78. For example, while at least one of pivot axes P1-P4 is disposed on a laterally inner side of pulley plane P, and at least one of pivot axes P1-P4 is disposed on a laterally outer side of pulley plane P, in this embodiment second pivot axis P2 as measured according to the definition above is disposed entirely on the laterally outer side of pulley plane P (as well as movable member plane M) in the position shown in Fig. 3. In this embodiment, pulley plane P intersects a space S 1 between any facing surfaces (e.g., surfaces 261 and 262 shown in Fig. 2) of upper link 162 and lower link 166 as shown in Fig. 4. Pulley plane P also intersects base member 70 when chain guide 78 is disposed in a position somewhere between the laterally outermost position and the laterally innermost position, such as the laterally outermost position shown in Fig. 3.

As shown further in Fig. 4 (with spring 181 removed for clarity), a movable member plane M that is substantially parallel to pulley plane P intersects an innermost surface 264 of movable member 74. In this embodiment, innermost surface 264 is coplanar with movable member plane M, although other configurations are possible since movable member 74 may have many different shapes. Movable member plane M intersects both upper link 162 and lower link 166, pivot axes P1 and P3, and the space S1 between facing surfaces of upper link 162 and lower link 16 when chain guide 78 is disposed in a position somewhere between the laterally outermost position and the laterally innermost position. Furthermore, at least a portion of a space S2 between movable member plane M and pulley plane P intersects the space S1 between facing surfaces of upper link 162 and lower link 16 when chain guide 78 is disposed in a position somewhere between the laterally outermost position and the laterally innermost position, such as the laterally outermost position shown in Fig. 4.

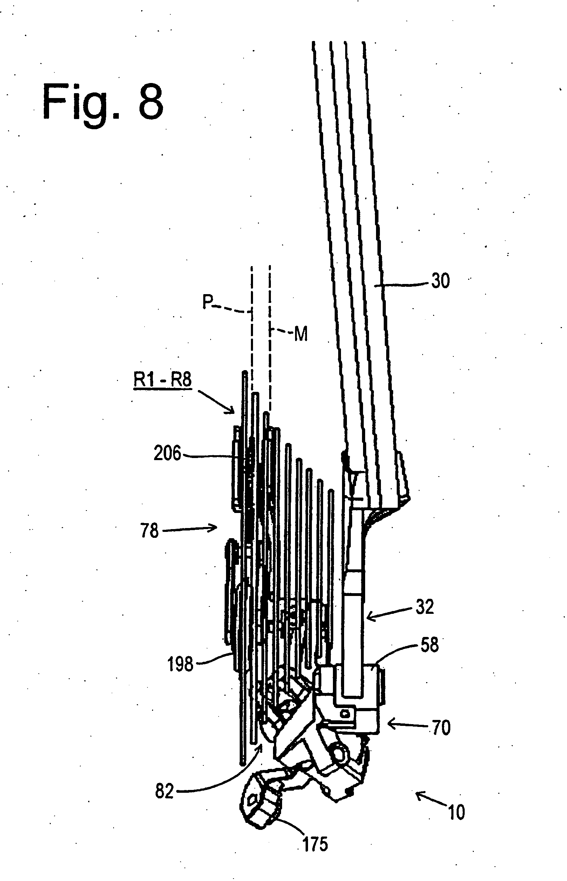

As shown in Figs. 3 and 8, derailleur 10 has a very low lateral profile. For example, when chain guide 78 is located in the laterally outermost position shown in Fig. 3, the components barely protrude laterally outward relative to frame 14. Actuating arm 175 and portions of linkage mechanism 82 are disposed laterally inward from pulley plane P and movable member plane M and follow the diagonal contour of sprockets R1-R8, thereby forming a very compact structure. When chain guide 78 is located in the laterally innermost position shown in Fig. 8, mounting boss 58 is the laterally outermost portion of derailleur 10. In fact, mounting boss 58 does not even protrude laterally outward relative to chain stay 26 or seat stay 30. In this position, actuating arm 175 and linkage mechanism 82 again following the diagonal contour of sprockets R1-R8.

Prior art derailleurs do not have the ability to have such a low profile. One reason is that the chain guide in prior art derailleurs has a chain pushing member that is formed as one piece with an inner plate that extends from the upper guide pulley to the lower tension pulley, and this inner plate limits the ability of the chain guide to move laterally outwardly. In the presently disclosed embodiment, chain pushing member 214 is dimensioned to as not to interfere with the ability of chain guide 78 to move laterally outwardly. The two-piece structure of chain guide 78 further facilitates such lateral movement. Furthermore, the base member and linking mechanism in prior art derailleurs are dimensioned to be mounted substantially below, or even in front of, the rotational axis X of the rear wheel, and this requires sufficient lateral spacing to ensure that the linking mechanism does not strike the sprockets during operation. Since base member 70, upper link 162, lower link 166 movable member 74 and chain guide 78 in the presently disclosed embodiment are dimensioned so that guide pulley 198 is located at a range of from approximately 220° to approximately 270° relative to rotational axis X when chain guide 78 is disposed in the laterally outermost position, the lateral distance required for the components further decreases because the linking mechanism is able to more closely follow the contour formed by the outer peripheral surfaces of the plurality of sprockets R1-R8. Of course, while many of the features described herein contribute to a markedly low profile derailleur, not all features are required, depending upon the application.

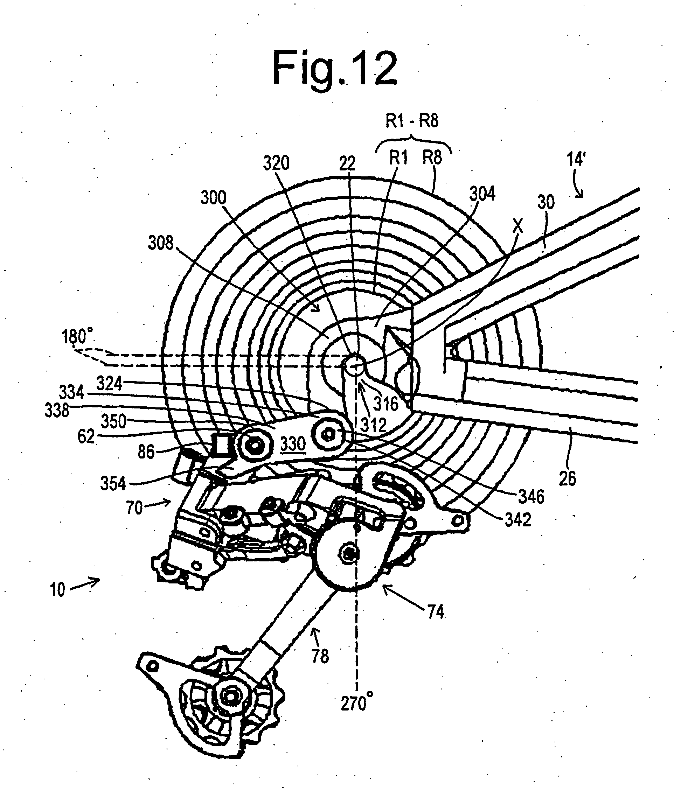

Fig. 12 is a laterally outer view of rear derailleur 10 mounted to a frame end 300 of a conventional frame 14'. In this case, frame end 300 comprises a forward portion 304 and a rearward portion 308, wherein forward portion 304 extends from chain stay 26 and seat stay 30 to a horizontal position aligned with rotational axis X, and rearward portion 308 extends from a horizontal position aligned with rotational axis X rearwardly and substantially vertically downwardly. A junction between forward portion 304 and rearward portion 308 forms an axle receiving slot 312 dimensioned to receive rear axle 22 therein. In this embodiment, axle receiving slot 312 again is oriented substantially vertically with a slight incline and defines an open end 316 and a closed end 320, wherein open end 316 is disposed below closed end 320. Rearward portion 308 forms an annular mounting boss 324 with an opening (not shown) dimensioned to receive a mounting bolt 328 therein.

Derailleur 10 is mounted to an extension member 330 having a first end portion 334 and a second end portion 338, wherein first end portion 334 includes a mounting opening 342 dimensioned for receiving mounting bolt 328 therein. Second end portion 338 includes a derailleur attachment structure in the form of a derailleur mounting opening 350 dimensioned for receiving mounting bolt 62 therethrough. Extension member 330 is dimensioned such that, when extension member 330 is attached to frame end 300, mounting opening 350, and hence boss member 86 of base member 70 of derailleur 10, is located from approximately 180° to approximately 240° relative to axle receiving opening 312, from approximately 180° to approximately 240° relative to rotational axis X, or, to facilitate measurement independently of axle 22, from approximately 180° to approximately 240° relative to closed end 320 of axle receiving opening 312. Rearward portion 38 extends further rearwardly from derailleur mounting opening 350 to form a position setting abutment 354 that functions in the same manner as position setting abutment 66 in the first embodiment.

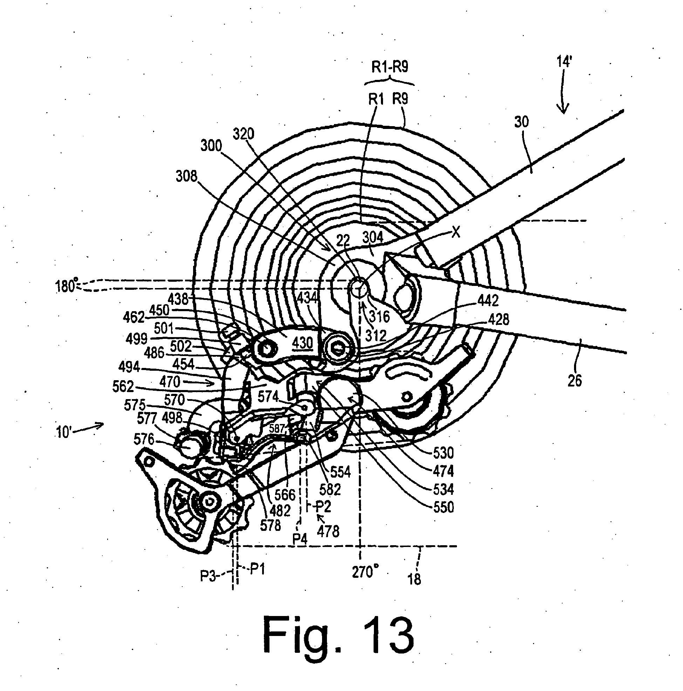

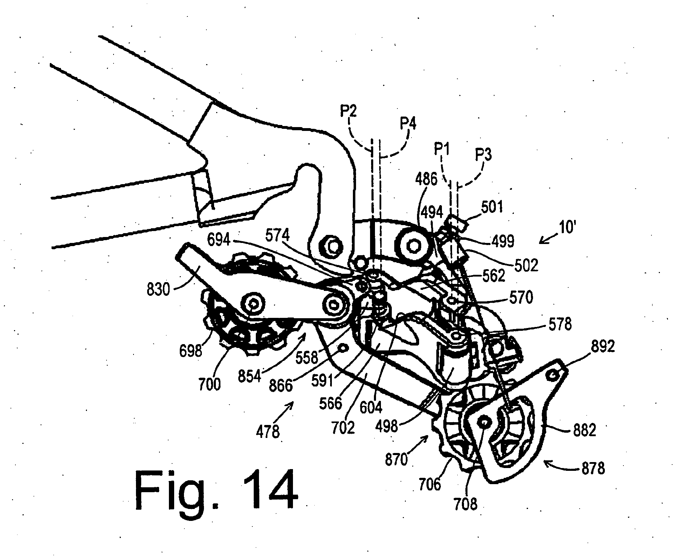

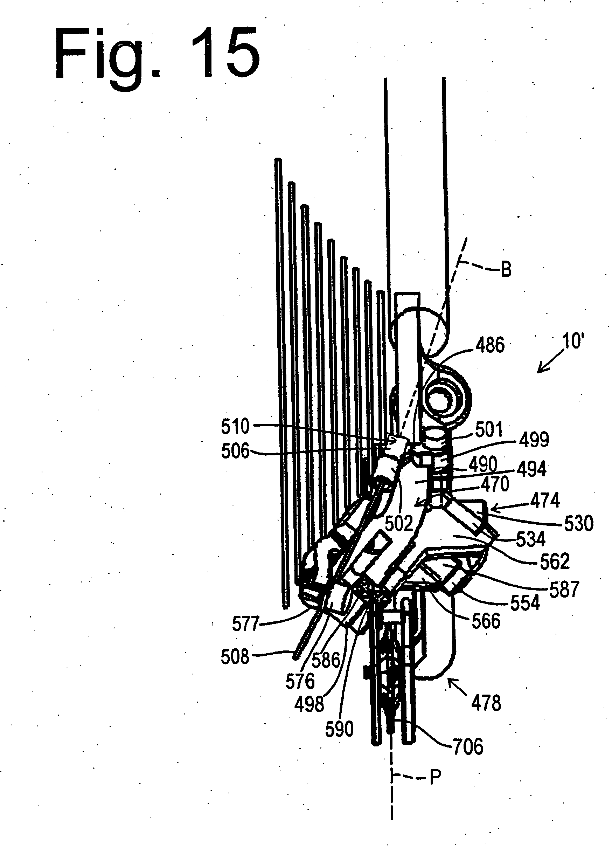

Fig. 13 is a laterally outer view of another embodiment of a rear derailleur 10' mounted to frame end 300 of conventional frame 14', Fig. 14 is a laterally inner view of derailleur 10', and Fig. 15 is a rear view of derailleur 10' in a position for engaging chain 18 with the smallest rear sprocket R1. Frame end 300 has the same construction as frame end 300 in Fig. 12, and like elements are numbered the same.

Derailleur 10' is mounted to an adapter 430 having a first end portion 434 and a second end portion 438, wherein first end portion 434 includes a mounting opening 442 dimensioned for receiving a mounting bolt 428 therein. Second end portion 438 includes a derailleur attachment structure in the form of a derailleur mounting opening 450 dimensioned for receiving a mounting bolt 462 therethrough. Adapter 430 is dimensioned such that, when adapter 430 is attached to frame end 300, mounting opening 450, and hence a mounting boss 486 of base member 470 of derailleur 10', is located from approximately 180° to approximately 240° relative to axle receiving opening 312, from approximately 180° to approximately 240° relative to rotational axis X, or, to facilitate measurement independently of axle 22, from approximately 180° to approximately 240° relative to closed end 320 of axle receiving opening 312. Second end portion 438 extends further rearwardly from derailleur mounting opening 450 to form a position setting abutment 454 that functions in the same manner as position setting abutment 66 in the first embodiment.

Derailleur 10' comprises base member 470, a movable member 474 that supports a chain guide 478, and a linking mechanism 482 coupled between base member 470 and movable member 474 so that chain guide 478 moves laterally relative to base member 470. Base member 470 comprises annular mounting boss 486 with a mounting surface 490 (Fig. 15) that faces laterally outward to face second end portion 438 of adapter 430, a transition portion 494 that extends rearward and downward at an incline from mounting boss 486, and a link coupling portion 498 disposed at a lower end portion of transition portion 494.

An adjuster mounting boss 499 extends rearward and then laterally outward from mounting boss 486. Adjuster mounting boss 499 includes an adjuster mounting structure in the form of a threaded opening dimensioned to threadingly engage an adjuster in the form of an adjusting screw 501. The tip of adjusting screw 501 abuts against position setting abutment 454 on adapter 430. Thus, the rotational position between adapter 430 and base member 470 may be adjusted simply by rotating adjusting screw 501.

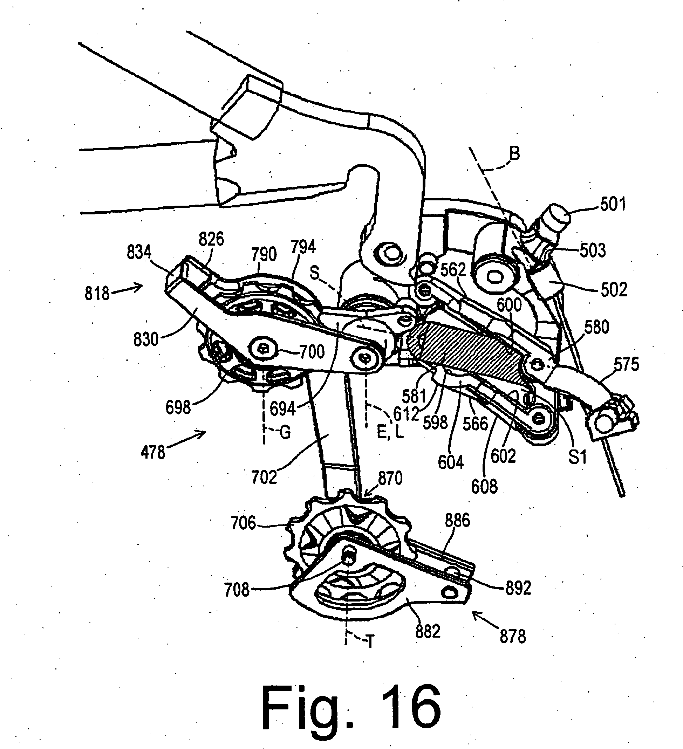

An outer casing coupler 502 in the form of a hollow cylinder is disposed on an upper portion of transition portion 494, wherein outer casing coupler 502 is dimensioned to couple to and terminate an outer casing 506 (Fig. 15) of a Bowden cable 510. Outer casing coupler 502 is positioned to be located rearward from rotational axis X and, more particularly, rearward from adapter 430 and at least partially laterally inward from mounting surface 490 of base member 470. In this embodiment, outer casing coupler 502 is disposed at the laterally inward edge of transition portion 494 of base member 470 as shown in Fig. 15. Outer casing coupler 502 includes an outer casing receiving bore 503 (Figs. 15 and 16) having a bore axis B that is inclined relative to a pulley plane P as in the first embodiment. If desired, a cable adjusting bolt (not shown) may be mounted in outer casing receiving bore 503 so as to be disposed between outer casing coupler 502 and outer casing 506.

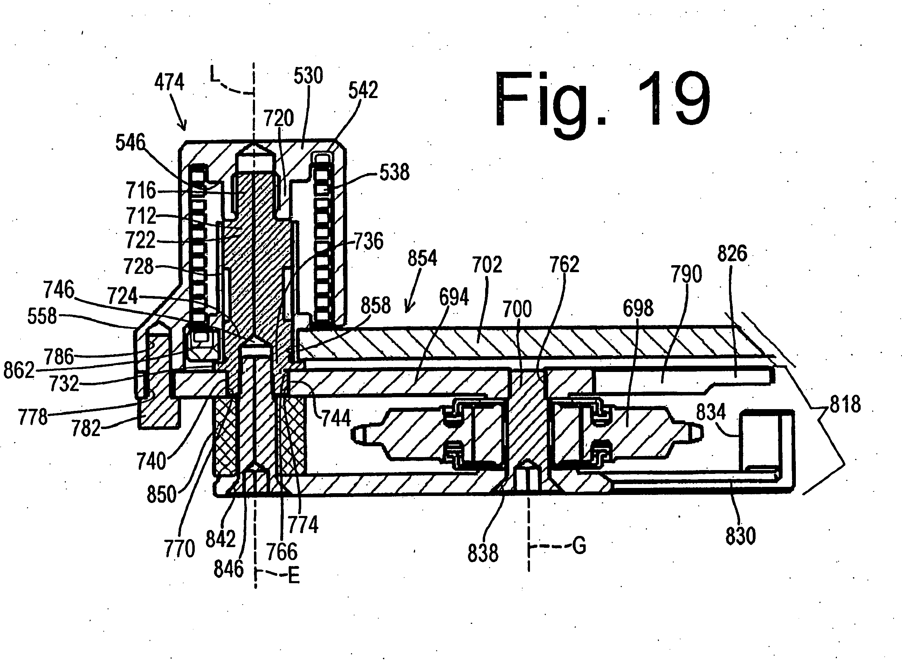

Movable member 474 comprises a main body 530 and a link mounting frame 534. In this embodiment, main body 530 comprises a generally cylindrical member that houses a torsion coil spring 538 (Fig. 19), one end of which is inserted into a spring mounting opening 542 formed in a laterally inner side wall 546 of main body 530. Link mounting frame 534 comprises an upper link mounting boss 550, a lower link mounting boss 554, and an extension member mounting frame 558 (Fig. 14), all of which are formed as one piece with main body 530.

Linking mechanism 482 comprises a pair of linking members in the form of a laterally outer upper link 562 and a laterally inner lower link 566. A first end of upper link 562 is forked to straddle link coupling portion 498 of base member 470 and is pivotably connected thereto by a pivot shaft 570 that defines a pivot axis P1. The second end of upper link 562 is forked to straddle upper link mounting boss 550 of link mounting frame 534 of movable member 474 and is pivotably connected thereto by a pivot shaft 574 that defines a pivot axis P2. In this embodiment, a distance between the outermost edges of the first end of upper link 562 at base member 470 is greater than a distance between the outermost edges of the second end of upper link 562 at movable member 474. An actuating arm 575 extends downwardly and laterally outwardly from the first end of upper link 562, and then extends laterally outwardly to a position approximately to the middle of link coupling portion 498 of base member 470. A cable attachment structure in the form of a bolt 576 and a clamping washer 577 is provided at the outer end of actuating arm 575 to attach an inner cable 508 of Bowden cable 510 as shown in Fig. 15. Bolt 576 and washer 577 are disposed laterally inward from mounting surface 490 of base member 470 when chain guide 478 is located at a laterally outermost position.

A first end of lower link 566 is forked to straddle link coupling portion 498 of base member 470 and is pivotably connected thereto by a pivot shaft 578 that defines a pivot axis P3. The second end of lower link 566 forms a cylindrical mounting boss 587 that is straddled by lower link mounting boss 554 of link mounting frame 534 of movable member 474 and is pivotably connected thereto by a pivot shaft 582 that defines a pivot axis P4. Because of this arrangement, a distance between the outermost edges of the first end of lower link 566 at base member 470 is greater than a distance between the outermost edges of the second end of lower link 566 at movable member 474.

An outer limit adjusting screw 586 (Fig. 15) and an inner limit adjusting screw 590 are mounted at the border between transition portion 494 and link coupling portion 498 of base member 470 to adjust the laterally outermost and laterally innermost positions of movable member 474, respectively, in a well known manner.

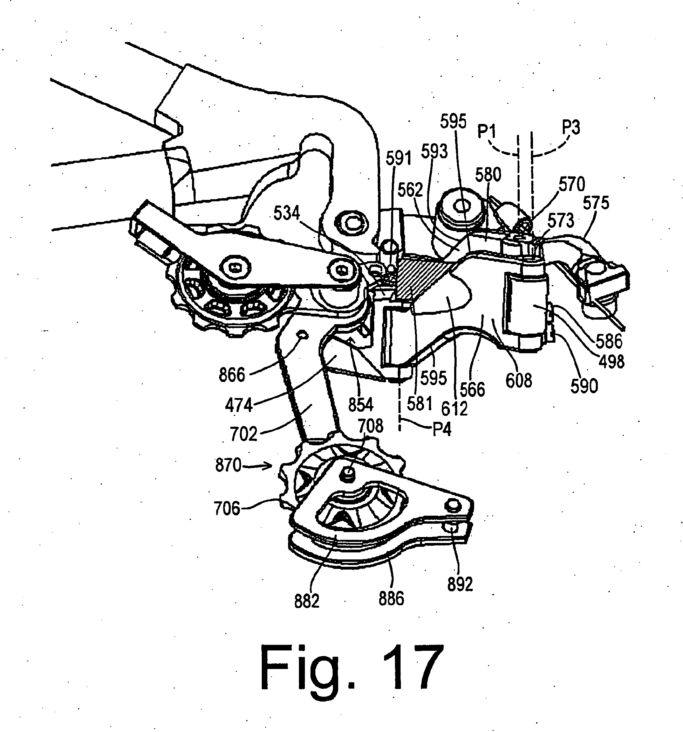

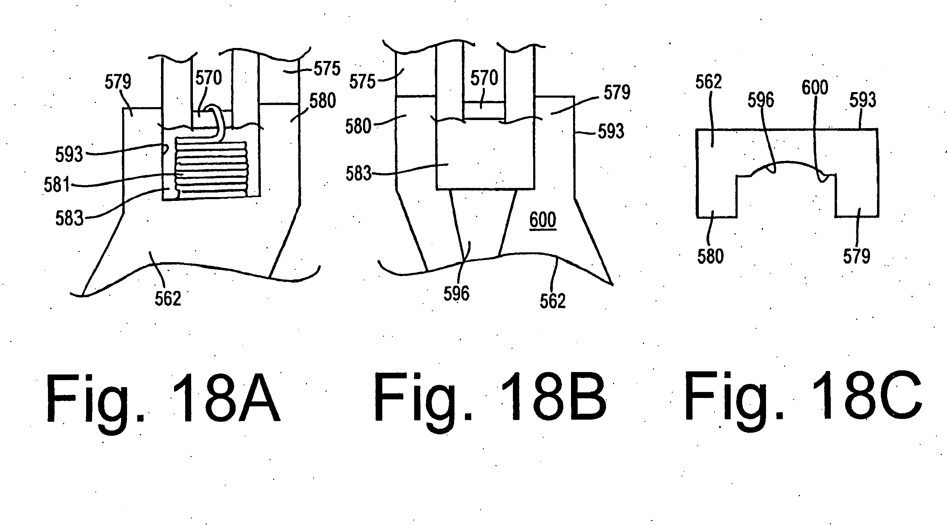

As shown in Fig. 18A, legs 579 and 580 of upper link 562 form a spring receiving channel 583 in the form of a cutout to receive a biasing member in the form of a coil spring 581 therein. The end of spring 581 is coupled to base member 470 at a first location represented by pivot shaft 570. As shown in Fig. 17, the other end of spring 581 is coupled to movable member 474 at a second location represented by a spring mounting post 591 attached to link mounting frame 534 of movable member 474 coaxially with pivot shaft 582. Fig. 14 omits spring 581 to show spring mounting post 591 more clearly. As a result of this structure, spring 581 biases movable member 474 laterally outwardly. In this embodiment, spring 581 coils around a spring axis S (Fig. 16) that extends in a direction substantially perpendicular to at least one of the pivot axes P1-P4.

As shown in Fig. 18A, spring 581 is retained at pivot shaft 570. As shown in Fig. 17, spring 581 is retained at spring mounting post 591 outside of the outer peripheral surface 593 of upper link 562 and outside of an outer peripheral surface 595 of lower link 566 when viewed perpendicular to pivot axes P1-P4. In this embodiment, pivot axes P1-P4 are parallel to each other. Also, upper link 562 and lower link 566 each overlap at least a portion of spring 581 when viewed perpendicular to at least one of the pivot axes P1-P4. In this embodiment, both upper link 562 and lower link 566 overlap at least a portion of spring 581 when viewed perpendicular to at least one of the pivot axes P1-P4 so that a portion of spring 581 is sandwiched between upper link 562 and lower link 566.

To reduce the spacing between upper link 562 and lower link 566, a spring receiving channel 596 (Figs. 18B and 18C) in the form of an arcuate concave recess is formed on an inner surface 600 of upper link 562 facing lower link 566. Another spring receiving channel 598 (Fig. 16) in the form of an arcuate concave recess is formed on an inner surface 602 of lower link 566 facing upper link 562 so that the recess exits a lateral inclined side surface 604 of lower link 566. To maintain the thickness and strength of lower link 566, an outer surface 608 of lower link 566 forms a convex bulge 612 opposite spring receiving channel 598. In this embodiment, a depth of spring receiving channels 596 and 598 varies to accommodate the inclined orientation of spring 581 relative to upper link 562 and lower link 566. The depth of spring receiving channels 596 and 598 is greatest where spring 581 crosses the respective outer peripheral surfaces 593 and 595.

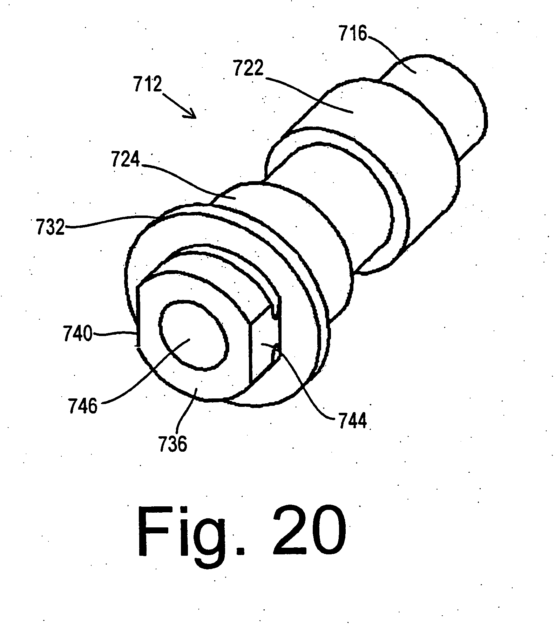

As seen more clearly in Fig. 16, chain guide 478 comprises an extension member in the form of an upper chain guide link 694, an upper guide pulley 698 mounted to upper chain guide link 694 at a guide pulley coupling location through a pivot shaft 700 for rotation around a guide pulley axis G, a pulley link in the form of a lower chain guide link 702, and a lower tension pulley 706 rotatably mounted to lower chain guide link 702 at a tension pulley coupling location through a pivot shaft 708. As shown in Fig. 19, a pivot shaft 712 is mounted within main body 530 of movable member 474 radially inward of spring 538. As shown in Figs. 19 and 20, pivot shaft 712 comprises a stepped cylindrical member having a smaller diameter portion 716 that is press fit into a shaft mounting boss 720 within main body 530, a pair of larger diameter portions 722 and 724 around which is mounted a tubular bearing 728, a large diameter spacer flange 732, and a smaller diameter fixing boss 736 representing a movable member coupling location with an extension member shaft axis E and having a pair of opposed rotation preventing flats 740 and 744 and a shaft mounting opening 746.

Upper chain guide link 694 is a plate-shaped member with a pivot shaft opening 762 for mounting one end of pivot shaft 700, a first rotation preventing opening 766 having a pair of rotation preventing flats 770 and 774 that engage rotation preventing flats 740 and 744 on pivot shaft 712, and a second rotation preventing opening 778. A rotation preventing bolt 782 extends through second rotation preventing opening 778 and screws into a threaded opening 786 in extension member mounting frame 558. As a result, upper chain guide link 694 is nonrotatably mounted to extension member mounting frame 558, and guide pulley axis G is fixed offset forwardly of extension member shaft axis E.

A chain pushing member 790 is mounted to upper chain guide link 694. In this embodiment, chain pushing member 790 is integrally formed (e.g., one piece) with upper chain guide link 694. Chain pushing member 790 is disposed between extension member mounting frame 558 and guide pulley 698, with an arcuate portion 794 (Fig. 16) disposed in close proximity to the teeth on guide pulley 698. Chain pushing member 790 is provided to push chain 18 when switching chain 18 from a smaller diameter sprocket to a larger diameter sprocket and to prevent chain 18 from derailing from guide pulley 698.

A chain regulating unit 818 also is mounted to upper chain guide link 694. In this embodiment, chain regulating unit 818 comprises an outer plate 826, an inner plate 830 and a regulator plate 834. Outer plate 826 is integrally formed (e.g., one piece) with and extends radially outward from chain pushing member 790. Inner plate 830 includes a pivot shaft opening 838 for mounting the other end of pivot shaft 700, and amounting shaft opening 842 for mounting one end of a mounting shaft 846 that is press fit into shaft mounting opening 746 in pivot shaft 712 and is therefore coaxial with extension member shaft axis E. A cylindrical bushing 850 is mounted around mounting shaft 846 between upper chain guide link 694 and inner plate 830 to maintain the proper spacing between the two components. Regulator plate 834 is integrally formed (e.g., one piece) with inner plate 830, and it extends laterally from inner plate 830 toward outer plate 826. Outer plate 826 helps to prevent chain 18 from derailing from guide pulley 698 when switching chain 18 from a larger diameter sprocket to a smaller diameter sprocket, and inner plate 830 helps to prevent chain 18 from derailing from guide pulley 698 when switching chain 18 from a smaller diameter sprocket to a larger diameter sprocket. Regulator plate 834 helps to prevent excessive radial movement of chain 18. Chain regulating unit 818 may be omitted in some embodiments.

As shown in Figs. 14, 17 and 19, an upper end 854 of lower chain guide link 702 includes an opening 858 (Fig. 19) through which bearing 728 and pivot shaft 712 pass so that lower chain guide link 702 is supported relative to movable member 474 and upper chain guide link 694 for rotation around a pulley link axis L coaxial with extension member shaft axis E at a movable member coupling location. Upper end 854 also includes a spring mounting opening 862 in which is inserted the other end of spring 538 so that lower chain guide link 702 is biased clockwise (in Fig. 1) relative to movable member 474. A rotation stopping pin 866 that extends toward movable member 474 is mounted to lower chain guide link 702 for contacting movable member 474 to set a home position for lower chain guide link 702.

As shown in Figs. 14 and 16, a lower end 870 of lower chain guide link 702 supports tension pulley 706 through pivot shaft 708 for rotation around a tension pulley axis T and nonrotatably supports a chain regulating unit 878. In this embodiment, upper end 854 is substantially vertically straight and is laterally outwardly offset relative to lower end 870, which also is substantially vertically straight. Chain regulating unit 878 comprises an inner plate 882, an outer plate 886 and a regulator pin 892. A radially inner end of inner plate 882 is coupled to pivot shaft 708, and a radially outer end of inner plate 882 is fastened to one end of regulator pin 892. In this embodiment, outer plate 886 is formed as a part of lower chain guide link 702 and supports pivot shaft 708. A radially outer end of outer plate 886 is fastened to the other end of regulator pin 892. Inner plate 882 helps to prevent chain 18 from derailing from tension pulley 706 when switching chain 18 from a larger diameter sprocket to a smaller diameter sprocket, and outer plate 886 helps to prevent chain 18 from derailing from tension pulley 706 when switching chain 18 from a smaller diameter sprocket to a larger diameter sprocket. Regulator pin 892 helps to prevent excessive radial movement of chain 18. Chain regulating unit 878 may be omitted in some embodiments.

Unlike the first embodiment, base member 470, movable member 474, chain guide 478 and linking mechanism 482 are dimensioned so that the guide pulley coupling location is offset forwardly of the movable member coupling location at fixing boss 736 of pivot shaft 712. This is the case even when a bias is applied to guide pulley 698, such as a rearward bias usually caused by chain 18. This increases the distance between guide pulley 698 and tension pulley 706, thereby allowing tension pulley to take up more slack in chain 18 without requiring tension pulley 706 to be located closer to the ground.

As in the first embodiment, guide pulley 698 has a pulley plane P (Fig. 15) that bisects guide pulley 698. Each tooth on guide pulley 698 is symmetrical and centered on the pulley when viewed perpendicular to pivot shaft 700 so that pulley plane P is located in the center of guide pulley 698, and all of the pulley teeth lie in pulley plane P. In this embodiment, pulley plane P also bisects tension pulley 706. In order to provide a decreased laterally outward profile for derailleur 10', the components are structured so that pulley plane P intersects at least one of upper link 562 or lower link 566 when chain guide 478 is disposed in a position somewhere between a laterally outermost rest position and a laterally innermost position (such as the laterally outermost position shown in Fig. 15).

As in the first embodiment, pulley plane P intersects at least one of pivot axis P1 or pivot axis P3 when measured across all components at the coupling when chain guide 478 is disposed in a position somewhere between a laterally outermost rest position and a laterally innermost position (such as the laterally outermost position shown in Fig. 15). For example, pivot shaft 570 defines pivot axis P1 and couples upper link 562 to base member 470. The opposite tips of pivot shaft 570 are exposed at the opposite lateral sides of upper link 562. The length of pivot axis P1 measured across all components at the coupling therefore extends from the opposite tips of pivot shaft 570. Similarly, pivot shaft 578 defines pivot axis P3 and couples lower link 566 to base member 470. The opposite tips of pivot shaft 578 are exposed at the opposite lateral sides of lower link 566. The length of pivot axis P3 measured across all components at the coupling therefore extends from the opposite tips of pivot shaft 578.

In this embodiment, pulley plane P intersects both upper link 562 and lower link 566 as well as pivot axes P1 and P3 when chain guide 478 is disposed in a position somewhere between the laterally outermost position and the laterally innermost position, such as the laterally outermost position shown in Fig. 15. However, it is not necessary to intersect all recited components at all lateral positions of chain guide 478. For example, while at least one of pivot axes P1-P4 is disposed on a laterally inner side of pulley plane P, and at least one of pivot axes P1-P4 is disposed on a laterally outer side of pulley plane P, in this embodiment second pivot axis P2 as measured according to the definition above is disposed entirely on the laterally outer side of pulley plane P in the position shown in Fig. 15. In this embodiment, pulley plane P intersects a space S1 (Fig. 16) between any facing surfaces of upper link 562 and lower link 566 (e.g., surfaces 600 and 602). Pulley plane P also intersects base member 470 when chain guide 478 is disposed in a position somewhere between the laterally outermost position and the laterally innermost position, such as the laterally outermost position shown in Fig. 15.

While the above is a description of various embodiments of inventive features, further modifications may be employed without departing from the scope of the present invention as claimed. For example, the size, shape, location or orientation of the various components may be changed as desired. Components that are shown directly connected or contacting each other may have intermediate structures disposed between them. The functions of one element may be performed by two, and vice versa. The function of one element may be performed by another, and functions may be interchanged among the elements. The structures and functions of one embodiment may be adopted in another embodiment.

## Claims

1. A bicycle rear derailleur comprising:
a base member (470);
a movable member (474) supporting a chain guide (478);
a first linking member (562) coupled between the base member (470) and the movable member (474) so that the movable member (474) moves laterally relative to the base member (470);
wherein the first linking member (562) rotates relative to the base member (470) around a first axis (P1);
wherein the first linking member (562) rotates relative to the movable member (474) around a second axis (P2); and
a biasing member (581) coupled to bias the movable member (474) laterally relative to the base member, wherein the biasing member is retained at a first location (570) outside of an outer peripheral surface of the first linking member (562) when viewed perpendicular to at least one of the first axis (P1) or the second axis (P2), and wherein the first linking member (562) overlaps at least a portion of the biasing member (581) when viewed perpendicular to the at least one of the first axis or the second axis,
wherein the biasing member comprises a spring (581), **characterized in that**
the spring comprises a coil spring (581) that coils around a spring axis (S) that extends in a direction substantially perpendicular to at least one of the first axis (P1) and the second axis (P2).

2. The derailleur according to claim 1 wherein the coil spring has a first end retained at the first location.

3. The derailleur according to claim 2 wherein the first location is disposed at the second axis.

4. The derailleur according to claim 2 or 3 wherein the coil spring (581) has a second end retained at a second location.

5. The derailleur according to claim 4 wherein the first location is disposed at second axis, and wherein the second location is disposed at the first axis.

6. The derailleur according to any one of claims 1 to 5 further comprising:
a second linking member (566) coupled between the base member (470) and the movable member (474) so that the movable member moves laterally relative to the base member;
wherein the second linking member (566) rotates relative to the base member around a third axis (P3); and
wherein the second linking member (566) rotates relative to the movable member around a fourth axis (P4).

7. The derailleur according to claim 6 wherein a portion of the biasing member (581) is sandwiched between the first linking member (562) and the second linking member (566).

## Patentansprüche

1. Fahrradheckderailleur, umfassend:
ein Basiselement (470);
ein bewegliches Element (474), welches eine Kettenführung (478) stützt;
ein erstes Kopplungselement (562), gekoppelt zwischen dem Basiselement (470) und
dem beweglichen Element (474), so dass das bewegliche Element (474) sich lateralwärts relativ zu dem Basiselement (470) bewegt;
wobei das erste Kopplungselement (562) sich relativ zu dem Basiselement (470) um eine erste Achse (P1) dreht;
wobei das erste Kopplungselement (562) sich relativ zu dem beweglichen Element (474) um eine zweite Achse (P2) dreht; sowie
ein Vorspannelement (581), gekoppelt zum Vorspannen des beweglichen Elementes (474) lateralwärts relativ zu dem Basiselement, wobei das Vorspannelement zurückgehalten ist bei einem ersten Ort (570) außerhalb einer äußeren peripheren Fläche des ersten Kopplungselementes, (562), wenn gesehen senkrecht zu zumindest einer der ersten Achse (P1), oder der zweiten Achse (P2), und wobei das erste Kopplungselement (562) zumindest einen Abschnitt des Vorspannelementes (581) überlappt, wenn gesehen senkrecht zu der zumindest einen der ersten Achse oder der zweiten Achse, wobei das Vorspannelement eine Feder (581) enthält,
**dadurch gekennzeichnet, dass**
die Feder eine Spiralfeder (581) enthält, gewunden bezüglich einer Federachse (S), die sich in einer Richtung erstreckt, im Wesentlichen senkrecht zu zumindest einer der ersten Achse (P 1) und der zweiten Achse (P2).

2. Derailleur nach Anspruch 1, bei welchem die Spiralfeder ein erstes Ende zurückgehalten an dem ersten Ort aufweist.

3. Derailleur nach Anspruch 2, bei welchem der erste Ort an der zweiten Achse angeordnet ist.

4. Derailleur nach Anspruch 2 oder 3, bei welchem die Spiralfeder (581) ein zweites Ende zurückgehalten an einem zweiten Ort hat.

5. Derailleur nach Anspruch 4, bei welchem der erste Ort an der zweiten Achse angeordnet ist, und bei welchem der zweite Ort an der ersten Achse angeordnet ist.

6. Derailleur nach einem der Ansprüche 1 bis 5, ferner umfassend:
ein zweites Kopplungselement (566), gekoppelt zwischen dem Basiselement (470) und
dem beweglichen Element (474) so dass sich das bewegliche Element lateralwärts relativ zu dem Basiselement bewegt;
wobei das zweite Kopplungselement (566) sich relativ zu dem Basiselement um eine dritte Achse (P3) dreht; und
wobei das zweite Kopplungselement (566) sich relativ zu dem beweglichen Element um eine vierte Achse (P4) dreht.

7. Derailleur nach Anspruch 6, bei welchem ein Abschnitt des Vorspannelementes (581) sandwichartig vorliegt zwischen dem ersten Kopplungselement (562) und dem zweiten Kopplungselement (566).

## Revendications

1. Dérailleur arrière de bicyclette comprenant:
un élément de base (470) ;
un élément mobile (474) supportant un guide de chaîne (478) ;
un premier élément de liaison (562) couplé entre l'élément de base (470) et l'élément mobile (474), de sorte que l'élément mobile (474) se déplace latéralement par rapport à l'élément de base (470) ;
dans lequel le premier élément de liaison (562) tourne par rapport à l'élément de base (470) autour d'un premier axe (P1) ;
dans lequel le premier élément de liaison (562) tourne par rapport à l'élément mobile (474) autour d'un deuxième axe (P2), et
un élément de sollicitation (581) couplé pour solliciter l'élément mobile (474) latéralement par rapport à l'élément de base, dans lequel l'élément de base est retenu au niveau d'un premier emplacement (570) à l'extérieur d'une surface périphérique externe du premier élément de liaison (562) lorsque vu perpendiculaire à au moins l'un du premier axe (P1) ou du deuxième axe (P2), et dans lequel le premier élément de liaison. (562) recouvre au moins une partie de l'élément de sollicitation (581) lorsque vu perpendiculaire audit au moins un du premier axe ou du deuxième axe,
dans lequel l'élément de sollicitation comprend un ressort (581), **caractérisé en ce que** le ressort comprend un ressort hélicoïdal (581) qui s'enroule autour d'un axe de ressort (S) qui s'étend dans une direction sensiblement perpendiculaire à au moins l'un du premier axe (P1) et du deuxième axe (P2).

2. Dérailleur selon la revendication 1, dans lequel le ressort hélicoïdal a une première extrémité retenue au niveau du premier emplacement.

3. Dérailleur selon la revendication 2, dans lequel le premier emplacement est disposé au niveau du deuxième axe.

4. Dérailleur selon la revendication 2 ou 3, dans lequel le ressort hélicoïdal (581) a une deuxième extrémité retenue au niveau d'un deuxième emplacement.

5. Dérailleur selon la revendication 4, dans lequel le premier emplacement est disposé au niveau du deuxième axe, et dans lequel le deuxième emplacement est disposé au niveau du premier axe.

6. Dérailleur selon l'une quelconque des revendications 1 à 5, comprenant, en outre :
un deuxième élément de liaison (566) couplé entre l'élément de base (470) et
l'élément mobile (474), de sorte que l'élément mobile se déplace latéralement par rapport à l'élément de base ;
dans lequel le deuxième élément de liaison (566) tourne par rapport à l'élément de base autour d'un troisième axe (P3) ; et
dans lequel le deuxième élément de liaison (566) tourne par rapport à l'élément mobile autour d'un quatrième axe (P4).

7. Dérailleur selon la revendication 6, dans lequel une partie de l'élément de sollicitation (581) est prise en sandwich entre le premier élément de liaison (562) et le deuxième élément de liaison (566).
